# EUROPEAN PATENT SPECIFICATION

(11) **EP 0 374 567 B1**
(45) Date of publication and mention of the grant of the patent: **05.07.1995**
(21) Application number: 89122328.1
(22) Date of filing: 04.12.1989
(51) Int. Cl.: G06K 15/16

(54) **Electrostatic printer using continuous paper**
Elektrostatischer Drucker mit Endlospapier
Imprimante électrostatique utilisant du papier sans fin

(30) Priority: 23.12.1988 JP 323429/88
(43) Date of publication of application: 27.06.1990
(73) Proprietor: Kabushiki Kaisha Sato, Shibuya-ku Tokyo (JP)
(72) Inventor: Ito, Toyozo, Shibuya-ku Tokyo (JP)
(74) Representative: Grünecker, Kinkeldey, Stockmair & Schwanhäusser Anwaltssozietät

(56) References cited:
- EP-A- 0 314 517
- DE-A- 3 334 825
- US-A- 4 478 143

## Description

This invention relates to an electrostatic printer that uses continuous paper as the printing medium.

### Description of the Prior Art

The paper cutting means in electrostatic printers that use continuous paper is provided either directly after a paper transport means located between the paper holder and the electrostatic printing section there being no prepublished document corresponding to this prior art, or directly after the electrostatic printing section as is described in US-A-4 478 143 against which the claim is delimited. Therefore, if a problem should arise, if the operation of the paper transport means is continued even when the cutting means has been operated to cut the paper at the position of the cutting means, the paper continues to be fed to the electrostatic printing section, wasting paper and giving rise to singeing of the paper at the electrostatic printing section.

The object of the present invention is therefore to provide a continuous-paper electrostatic printer that is capable of preventing paper wastage caused by allowing paper to be needlessly fed to, and scorched at, the electrostatic printing section, in cases where a set of print data A is to be printed on a specific number of labels on the continuous paper followed by the printing of a set of print data B on a specific number of labels and the new print data is being input while the print data that has already been input is being printed, and the printing of the data that has already been input is completed prior to the completion of the input of the print data that is to be printed next.

In accordance with the present invention, the above object is attained by a method for transporting continuous paper of an electrostatic printer as specified in the claim.

When a supervisory time period that has been set for the electrostatic printer ends after the printing of one prescribed set of print data has been completed and before the following set of print data is ready for printing, the cutting means located just downstream of the paper holder is activated to cut the paper and the transportation of the paper upstream of the cutting means by the transport means located between the cutting means and the electrostatic printing section is halted, and the section of the paper thus cut extending from the cutting means to the electrostatic printing section is ejected by the ejection means located on the downstream side of the electrostatic printing section in the direction of paper travel.

Further features of the invention, its nature and various advantages will be more apparent from the accompanying drawings and the following detailed description of the invention.

### BRIEF DESCRIPTION OF THE DRAWINGS

Figure 1 is a general view of a first embodiment of the continuous-paper electrostatic printer of the present invention;
Figure 2 is a block diagram of a control means according to the invention; and
Figure 3 is a flow chart illustrating the operation of the invention.

### DETAILED DESCRIPTION OF THE PREFERRED EMBODIMENTS

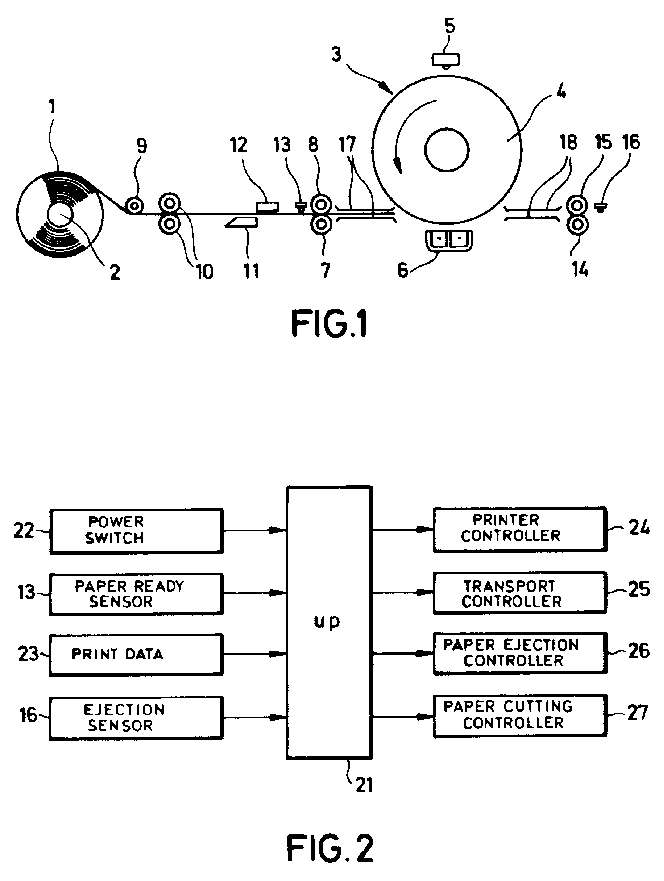

With reference to Figure 1, reference numeral 1 denotes a roll of paper consisting of a backing sheet coated with a separating agent and having a plurality of labels of the same size, each of which is coated with an adhesive, detachably adhered continuously along its length at a desired pitch. The roll of paper 1 is mounted rotatably on a reel 2 that constitutes the continuous-paper holder. Numeral 3 denotes an electrostatic printing section located a prescribed distance from the paper holder. The main constituents of the electrostatic printing section 3 are a light-sensitive drum 4, an LED head 5 and an electrostatic transfer element 6. Numeral 7 denotes a drive roller and numeral 8 a pressure roller. These rollers 7 and 8 form the transport means for the paper 1 and are located between the paper holder and the electrostatic printing section 3. Numerals 9 and 10 denote guide rollers for guiding the paper 1. The cutting means for cutting the paper 1 is constituted by a fixed blade 11 and a movable blade 12, which are located between the paper holder and the transport means. Located on the paper holder side of the transport means is a paper-ready sensor 13 that detects whether or not the paper 1 is positioned ready for transport. The paper-ready sensor 13 may instead be provided on the electrostatic printing section 3 side of the transport means.

The ejection means for ejecting the paper 1 is constituted by an ejection drive roller 14 and an ejection pressure roller 15, which are located on the downstream side of the electrostatic printing section in the direction of paper travel. Provided downstream of the ejection means is an ejection sensor 16 that detects whether or not the cut paper 1 has left the electrostatic printing section 3. Numerals 17 and 18 denote guide plates provided upstream and downstream, respectively, of the electrostatic printing section 3.

Figure 2 illustrates the operational means of the continuous paper electrostatic printer of the invention, which will now be described. A microprocessor 21 receives input from a power switch 22, the paper-ready sensor 13, ejection sensor 16, and print data 23. Connected to the output ports of the microprocessor 21 are an electrostatic control means 24 which controls the activation and deactivation of the light-sensitive drum 4, LED head 5 and electrostatic transfer element 6; a transport control means 25 which controls the activation and deactivation of the transport drive roller 7; an ejection control means 26 which controls the activation and deactivation of the ejection drive roller 14; and a cutting control means 27 which controls the activation and deactivation of the movable blade 12.

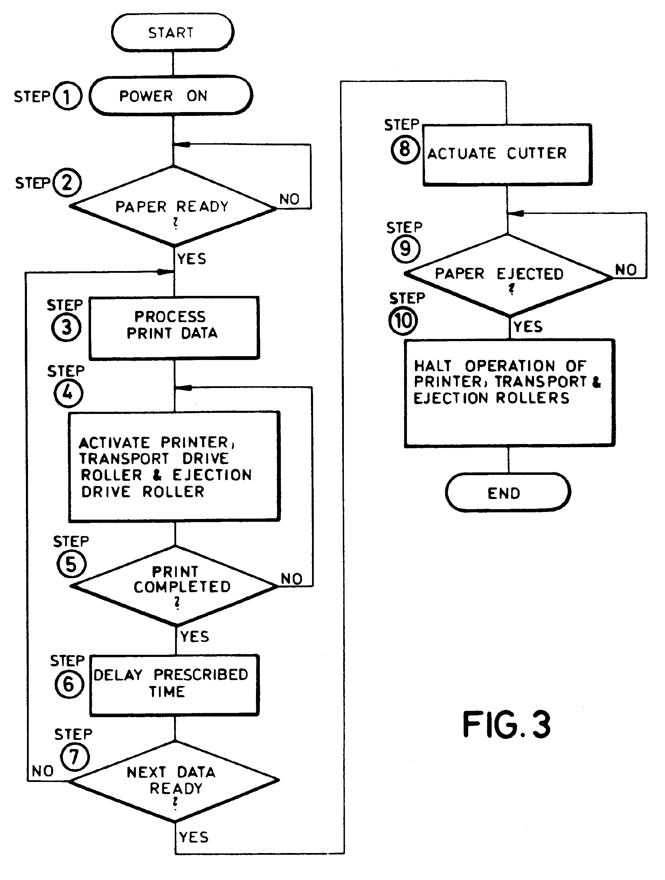

The continuous paper electrostatic printer operates in accordance with a program stored in a ROM in the microprocessor 21. This program, which is illustrated by the flow chart of Figure 3, will now be described.

When the power switch 22 is switched on in step 1, in step 2 it is determined whether or not the paper 1 is ready to be transported. This is determined by whether or not paper is detected opposite the paper-ready sensor 13. If the answer is No, the leading edge of the paper 1 is fed to the rollers 7 and 8, either manually or by an autoloading mechanism, when the apparatus is equipped with such a mechanism.

If in step 2 the answer is Yes, the process moves on to step 3, for the processing of print data the input of which has been completed. Examples of print data are price information on price tags and parcel address information. As one example, it may be required to print 100 labels with print data A, then 50 labels with print data B.

When processing of the print data has been completed, in step 4 the electrostatic control means 24, transport control means 25 and ejection control means 26 activate the electrostatic printing section 3 and the transport drive roller 7 to feed the paper 1 to the electrostatic printing section 3, and the ejection drive roller 14 is activated to eject the paper 1 from the electrostatic printing section 3.

Operating control of the electrostatic printing section 3 comprises rotation of the light-sensitive drum 4, energization and de-energization of the LED head 5, and activation of the electrostatic transfer element 6. The LED head 5 is energized and de-energized in accordance with line print data information. The position at which the printing of each label is to start can be controlled, for example, by signals output by position sensors (not shown) corresponding to the detection of spaces between the labels adhered to the backing sheet.

When each set of print data has been printed, in step 5 it is determined whether or not printing of the print data has been completed. If, as described above, there is a following set of print data A, the process goes back to step 4. If there is no more data to be printed, the process moves on to step 6 and a prescribed supervisory time period (such as 3 seconds, for example) is set.

In step 7, it is determined if the following print data has not been readied within the supervisory time period. If the answer is No, that is, if print data input has been completed, the process goes back to step 3.

It is preferable for the various control operations of step 4 to be suspended for the duration of the supervisory time period.

If the next print data is not ready for printing within the supervisory time period, the process moves to step 8 in which the cutting control means 27 operates the movable blade 12 to cut the paper 1.

Next, in step 9, it is determined whether the trailing edge of the cut paper 1 has passed the laser light source 3. This is determined by whether paper is no longer detected opposite the ejection sensor 16. If in step 9 the answer is Yes, the process moves to step 10 in which the overall operation of the system is halted by stopping the laser light source 3, transport drive roller 7 and ejection drive roller 14.

The transport drive roller 7 continues to be driven from the end of the supervisory time period until the trailing edge of the cut paper passes the position of the ejection sensor 16, but as it has been severed from the paper on the paper holder side at the cutting means, no paper transport takes place. The light-sensitive drum 4, transport drive roller 7 and ejection drive roller 14 may be operated from the same power source.

Although the embodiment has been described with reference to continuous paper consisting of a backing sheet to which labels are detachably adhered, it is not limited to this; ordinary continuous paper may be used instead. Also, instead of LED light, a laser beam may be used to form the image on the light-sensitive drum 4 of the electrostatic printing section.

The electrostatic printer therefore does not cause paper wastage by needlessly feeding the paper to the electrostatic printing section when there is no data to be printed, and thus prevents the paper accumulating and singeing at the electrostatic printing section.

In Fig. 3 the explanation to steps 1 to 10 read as follows:
step1: Switch on of the Power Switch
2: whether or not a roll of paper is set
3: a processing of print data
4: an actuation of the electrostatic printing section a driving actuation of the transport drive roller a driving actuation of the ejection drive roller
5: whether or not print data has been completed
6: a set of supervisory time period(3 seconds)
7: whether or not following print data has not been readied within the supervisory time period
8: the actuation of the movable blade
9: whether or not a trailing edge of the roll of paper has passed the electrostatic printing section
10: stop of the laser light source stop of rotation of the transport drive roller stop of rotation of the ejection drive roller.

### LIST OF PARTS

1 CONTINOUS PAPER
2 REEL
3 ELECTROSTATIC PRINTING SECTION
4 LIGHT-SENSITIVE DRUM
5 LED HEAD
6 ELECTROSTATIC TRANSFER ELEMENT
7 TRANSPORT DRIVE ROLLER
8 TRANSPORT PRESSURE ROLLER
9 GUIDE ROLLER
10 GUIDE ROLLER
11 FIXED BLADE
12 MOVABLE BLADE
13 PAPER-READY SENSOR
14 EJECTION DRIVE ROLLER
15 EJECTION PRESSURE ROLLER
16 EJECTION SENSOR
17 GUIDE PLATE
18 GUIDE PLATE
21 MICROPROCESSOR
22 POWER SWITCH
23 PRINT DATA
24 ELECTROSTATIC CONTROL MEANS
25 TRANSPORT CONTROL MEANS
26 EJECTION CONTROL MEANS
27 CUTTING CONTROL MEANS

## Claims

1. A method for transporting continuous paper (1) of an electrostatic printer comprising a continuous-paper holder (2), an electrostatic printing section (3) including an electrostatic printing head (5) for imprinting information on the continuous paper (1), a continuous-paper transport means (7,8) provided before the electrostatic printing section (3) for transporting the continuous paper (1) from the continuous-paper holder (2) to the electrostatic printing section (3), paper ejecting means (14,15) provided on the downstream side of the electrostatic printing section (3) for ejecting paper (1), and paper cutting means (11,12)
**characterized by**
- setting a predetermined time period for delaying operation of said electrostatic printing section (3) after completion of the printing of a prescribed first set of print data;
during said time period
halting transporting of said continuous-paper (1) from said continuous-paper holder (2) and determining whether a second set of data is ready for printing; and
If said second set of data is not ready at the completion of said time period
cutting the portion of said paper which extends from said paper cutting means (11,12) to said electrostatic printing section (3) at a position between said continuous paper holder (2) and said continuous paper transport means (7, 8); and ejecting the said portion of the paper out of said paper ejecting means (14, 15).

## Patentansprüche

1. Verfahren zum Transportieren von Endlospapier (1) bei einem elektrostatischen Drucker, umfassend einen Endlospapierhalter (2), einen elektrostatischen Druckabschnitt (3) mit einem elektrostatischen Druckkopf (5) zum Drucken von Informationen auf das Endlospapier (1), eine Endlospapiertransporteinrichtung (7, 8) welche vor dem elektrostatischen Druckabschnitt (3) vorgesehen ist, um das Endlospapier (1) von dem Endlospapierhalter (2) zu dem elektrostatischen Druckabschnitt (3) zu transportieren, Papierausgabeeinrichtungen (14, 15), welche in Förderrichtung hinter dem elektrostatischen Druckabschnitt (3) vorgesehen sind, um Papier (1) auszugeben, und Papierschneideeinrichtungen (11, 12),
**gekennzeichnet durch**
Einstellen einer vorbestimmten Zeitdauer zum Verzögern der Betätigung des elektrostatischen Druckabschnitts (3) nach Vollendung des Druckens eines vorgeschriebenen ersten Satzes von Druckdaten;
während dieser Zeitdauer Unterbrechen des Transportierens des Endlospapiers (1) von dem Endlospapierhalter (2) und Bestimmen, ob ein zweiter Satz von Daten zum Drucken bereit ist und, falls der zweite Satz von Daten nicht bei Beendigung dieser Zeitperiode bereit ist, Schneiden des Papierabschnittes, welcher sich aus den Papierschneideinrichtungen (11, 12) zu dem elektrostatischen Druckabschnitt (3) erstreckt an einer Position zwischen dem Endlospapierhalter und der Endlospapier-Transporteinrichtung (7, 8) und Ausgeben dieses Papierabschnittes aus den Papierausgabeeinrichtungen (14, 15).

## Revendications

1. Procédé destiné à transporter du papier sans fin (1) d'une imprimante électrostatique comprenant un porte-papier sans fin (2), une section d'impression électrostatique (3) comprenant une tête d'impression électrostatique (5) destinée à imprimer des informations sur le papier sans fin (1), des moyens (7, 8) de transport du papier sans fin prévus avant la section d'impression électrostatique (3) pour transporter le papier sans fin (1) depuis le porte-papier sans fin (2) jusqu'à la section d'impression électrostatique (3), des moyens d'éjection de papier (14, 15) prévus du côté aval de la section d'impression électrostatique (3) pour éjecter le papier (1), et des moyens de coupe de papier (11, 12),
caractérisé par le fait que
- on fixe une période de temps prédéterminée pour différer le fonctionnement de ladite section d'impression électrostatique (3) après achèvement de l'impression d'un premier ensemble de données d'impression prescrit ;
pendant ladite période de temps,
on interrompt le transport dudit papier sans fin (1) depuis ledit porte-papier sans fin (2) et on détermine si un deuxième ensemble de données est prêt pour l'impression ; et
si ledit deuxième ensemble de données n'est pas prêt à l'achèvement de ladite période de temps,
on coupe la partie dudit papier qui s'étend depuis lesdits moyens de coupe de papier (11, 12) jusqu'à ladite section d'impression électrostatique (3) à une position entre ledit porte-papier sans fin et lesdits moyens (7, 8) de transport du papier sans fin ; et on éjecte ladite partie du papier hors desdits moyens d'éjection de papier (14, 15).
